Europäisches Patentamt

European Patent Office

Office européen des brevets

(11) Veröffentlichungsnummer: **0 315 784**

**A1**

(12) **EUROPÄISCHE PATENTANMELDUNG**

(21) Anmeldenummer: 88116948.6

(22) Anmeldetag: **12.10.88**

(51) Int. Cl.⁴: **B23D 61/04**

(30) Priorität: **12.11.87 DE 3738492**

(43) Veröffentlichungstag der Anmeldung:
**17.05.89 Patentblatt 89/20**

(84) Benannte Vertragsstaaten:
**CH DE FR LI SE**

(71) Anmelder: **Gustav Wagner Maschinenfabrik GmbH & Co. KG**
**Opfersteinstrasse 11**
**D-7410 Reutlingen 1(DE)**

(72) Erfinder: **Werz, Bernhard**
**Grehenberglestrasse 45**
**D-7416 Trochtelfingen(DE)**

(74) Vertreter: **Popp, Eugen, Dr. et al**
**MEISSNER, BOLTE & PARTNER**
**Widenmayerstrasse 48 Postfach 86 06 24**
**D-8000 München 86(DE)**

(54) **Verfahren zum Befestigen von HSS-Schneiden oder dgl. an einem Werkzeug-Tragelement, sowie nach diesem Verfahren hergestellte Werkzeuge.**

(57) Verfahren zum Befestigen von HSS-Schneiden (3) oder dergleichen an einem Werkzeug-Tragelement aus metallischem Werkstoff, insbesondere der Stammscheibe (2) eines Kreissägeblatts (1) oder dem Trägerband eines Sägebands für eine Bandsäge, unter Anordnung von Zwischenstücken zwischen Tragelement und Schneiden, wobei die HSS-Schneiden (3) zunächst jeweils einzeln und weich bzw. in ungehärtetem Zustand auf ein Zwischenstück (4) aufgeschweißt werden, und wobei anschließend das Zwischenstück (4) samt Schneide (3) wärmebehandelt wird unter Aushärtung der Schneide (3) und gleichzeitiger Vergütung des Zwischenstücks (4), um dann das Zwischenstück (4) samt Schneide (3) auf das Tragelement (2) aufzuschweißen. Nach einem derartigen Verfahren hergestellte Werkzeuge zeichnen sich also durch HSS-Schneiden (3) aus, die über ein Zwischenstück (4) auf ein Werkzeug-Tragelement (z. B. die Stammscheibe 2) eines Kreissägeblatts (1), aufgeschweißt sind.

EP 0 315 784 A1

# Verfahren zum Befestigen von HSS-Schneiden oder dgl. an einem Werkzeug-Tragelement, sowie nach diesem Verfahren hergestellte Werkzeuge

Die Erfindung betrifft ein Verfahren zum Befestigen von HSS-Schneiden oder dgl. an einem Werkzeug-Tragelement gemäß dem Oberbegriff des Anspruches 1, sowie ein vorzugsweise nach diesem Verfahren hergestelltes Werkzeug.

Aus der DE-A-228 860 sind Sägeblätter mit aufgeschweißten Zähnen oder aufgeschweißtem Schneidekranz aus Schnellaufstahl bekannt, bei denen zwischen Schneidekranz und Stammblatt oder Nabe Zwischenstücke aus beliebigem schweißbarem Metall eingefügt sind. Die Zwischenstücke weisen in Umfangsrichtung jeweils einen Abstand voneinander auf, so daß sie sich während des Schweißens frei ausdehnen können. Auf diese Weise sollen die beim Schweißen auftretenden Spannungen abgebaut werden. Aufgrund der Unterteilung des Schneidekranzes in einzelne Segmente ist der gewünschte Spannungsabbau jedoch begrenzt. Dies ist offenbar auch der Grund dafür, daß es nach vollständiger Fertigstellung des Sägeblatts dieses bzw. die Zähne desselben gehärtet werden, wobei die Härtung in der Weise geschieht, daß Zahn für Zahn im Knallgasgebläse erwärmt und durch einen darauffolgenden Luftstrom wieder abgekühlt wird. Dadurch sollen durch die Schweißung bedingte Risse und Verwerfungen verhindert werden.

In der DE-A-27 39 346 ist zur Vermeidung von Sprödbruch an geschweißten Kreissägeblättern vorgeschlagen, diese jeweils so auszubilden, daß sie aus drei konzentrischen Zonen verschiedener Materialien bestehen. Die äußerste Zone, in welcher die Zähne liegen, bestehen aus Schnellarbeitsstahl, die Mittelzone besteht aus einem Stahl großer Zähigkeit, während die innere Zone aus einem Werkzeugstahl, z. B. einem mit Chrom oder Vanadium legierten Stahl solcher Struktur besteht, daß bei der für die Erzielung höchster Abnutzungsfestigkeit für den Schnellarbeitsstahl erforderlichen Wärmebehandlung sowohl eine große Härte als auch eine große Zähigkeit erreicht wird. Die Mittelzone soll eine solche Struktur haben, z. B. austenitischer Stahl mit hohem Nickelgehalt, daß eine Diffusion von Kohlenstoff von der inneren Zone zum Schnellarbeitsstahl in der äußeren Zone verhindert werden kann. Die Mittelzone kann statt aus austenitischem Stahl auch aus Werkzeugstahl geeigneter Qualität mit höherem Kohlenstoffgehalt als der austenitische Stahl bestehen. Um eine Diffusion von Kohlenstoff aus der Mittelzone zur äußeren Zone zu verhindern, soll die Verbindung vorzugsweise durch Elektronenstrahlschweißung erfolgen.

Dieses Verfahren hat sich in der Praxis nicht bewährt, zumal die äußere sowie Mittelzone zunächst in Form eines langgestreckten Bandes hergestellt und nach Verschweißung zu einem Ring geformt werden müssen, worauf die Verbindung mit der inneren Zone, nämlich dem Stammblatt, erfolgt.

In der Praxis wird daher bei Kreissägeblättern größeren Durchmessers auch anders vorgegangen:

HSS-Kreisringsegmente werden längs des Umfanges einer Stammscheibe aus vergütetem Stahl mit dieser vernietet. Dieses Verfahren ist sehr materialintensiv sowie aufwendig in der Konstruktion und Herstellung bedingt durch die bevorzugte Nut-/Feder-Verbindung zwischen der Stammscheibe und den HSS-Kreisringsegmenten. Aufgrund dieser Nut-/Feder-Verbindung fällt ein derart hergestelltes Kreissägeblatt auch relativ dick aus mit der Folge einer entsprechend großen Schnittbreite und eines entsprechend großen Schnittverlustes.

HSS-Kreissägeblätter kleineren Durchmessers werden aufgrund der genannten Schwierigkeiten vollständig aus dem teuren HSS-Material hergestellt. Auch dies stellt keine zufriedenstellende Lösung dar.

Schließlich sind Versuche unternommen worden, am Umfang einer Stammscheibe aus vergütetem Stahl mit niedrigem Kohlenstoffgehalt HSS-Schneiden bzw. - Zähnen unmittelbar aufzulöten. Da die Löttemperatur jedoch über der Anlaßtemperatur der HSS-Schneiden bzw. -Zähne liegt, ließ sich ein unzulässiger Härteabfall an den Schneiden bzw. Zähnen nicht vermeidne. Es wurde auch versucht, die HSS-Zähne durch Widerstandsschweißung direkt mit der Stammscheibe zu verbinden. Auch bei diesem Verfahren stellten sich Risse an den gehärteten HSS-Schneiden ein. Durch das Schweißen entsteht im Schnellstahl eine neue Härtezone, die äußerst spröde ist. Aus diesem Grunde läßt sich auf diesem Wege eine funktionsfähige Verbindung zwischen HSS-Schneiden und Stammscheibe eines Kreissägeblatts oder Trägerband einer Bandsäge nicht herstellen.

Der vorliegenden Erfindung liegt daher die Aufgabe zugrunde, ein Verfahren der eingangs genannten Art zu schaffen, mit dem auf einfache Weise eine dauerhaft feste Verbindung zwischen HSS-Schneiden und einem Werkzeug-Tragelement aus metallischem Material bzw. Werkstoff herstellbar ist. Es ist ferner Aufgabe, ein entsprechend ausgebildetes Werkzeug zur Verfügung zu stellen.

Diese Aufgabe wird erfindungsgemäß durch die Patentansprüche 1 ff bzw. 5 ff gelöst.

Der Kern der Erfindung liegt also darin, daß die HSS-Schneiden zunächst weich bzw. in ungehärtetem Zustand auf ein Zwischenstück aufgeschweißt werden, wobei dann das Zwischenstück samt Schneide wärmebehandelt wird unter Aushärtung der Schneide und gleichzeitiger Vergütung des Zwischenstücks. Anschließend läßt sich die Einheit "Zwischenstück und Schneide" problemlos auf das Tragelement aufschweißen, ohne daß die Härte der HSS-Schneide oder dgl. beeinflußt wird.

Durch die Erfindung wird eine bedeutende Einsparung des teuren Schneidwerkstoffs HSS erzielt. Es wird eine große Verbindungssicherheit durch Verwendung des Zwischenstücks erreicht. Der Übergang von Schneide zum Tragelement ist ausreichend zäh. Es lassen sich auf erfindungsgemäße Weise relativ schmale Kreissägeblätter bzw. Sägebänder herstellen mit entsprechend kleiner Schnittbreite, wodurch der Spanverlust entsprechend gering wird.

Die Einheit "Zwischenstück und Schneide" läßt sich optimal wärmebehandeln ohne Einfluß auf das Werkzeug-Tragelement. Die Verbindung zwischen Schneidstoff und Zwischenstück einerseits sowie Zwischenstück und Werkzeug-Tragelement andererseits ist einfach. Zusatzwerkstoffe werden dafür nicht benötigt. Vorzugsweise erfolgt die Verbindung jeweils durch Widerstandsschweißung.

Die Einheit "Zwischenstück und Schneide" läßt sich nach übermäßiger Abnutzung oder Beschädigung ohne weiteres durch den Benutzer der Werkzeuges auswechseln. Es muß lediglich eine neue Einheit am Werkzeug-Tragelement angeschweißt werden. Eine zusätzliche Wärmebehandlung durch den Benutzer ist nicht erforderlich, so wie es z. B. bei dem Verfahren nach der DE-A-228 860 vorgesehen ist.

Die erwähnten Schweißverbindungen zwischen Schneide und Zwischenstück einerseits und Zwischenstück und Werkzeugtragelement andererseits werden vorzugsweise durch Widerstands-, Laserstrahl-, Elektronenstrahl-, Plasma-Schweißen oder jedes andere Schweißverfahren hergestellt, die eine schmale Schweißnaht mit kleiner Wärmezone haben.

Vorzugsweise besteht das Zwischenstück aus einem Stahl mit niedrigem Kohlenstoffgehalt, insbesondere einem Kohlenstoffgehalt von weniger als 0,45 %. Aus einem ähnlichen oder demselben Material besteht vorzugsweise das Tragelement. Dieses kann jedoch genauso gut aus herkömmlichem Werkzeugstahl be stehen, da die Schweißverbindung zwischen dem Zwischenstück und dem Tragelement nicht kritisch ist.

Die Einheit "zwischenstück und HSS-Schneide" wird unter Verwendung einer weichen HSS-Schneide hergestellt, d. h. einer Schneide mit einer Brinell-Härte von etwa 230 bis 290 HB.

Die Schweißverbindung nach Anspruch 8 zeichnet sich durch eine besonders hohe Festigkeit aus.

Grundsätzlich ist es auch denkbar, für zwei oder drei benachbarte HSS-Schneiden ein gemeinsames Zwischenstück der erfindungsgemäßen Art zu verwenden. Diese Ausführungsform ist jedoch z. B. für die Auswechslung einzelner schadhafter HSS-Schneiden nachteilig. Auch ist eine erhöhte Anpassung an die Abmessungen des Werkzeug-Tragelements erforderlich.

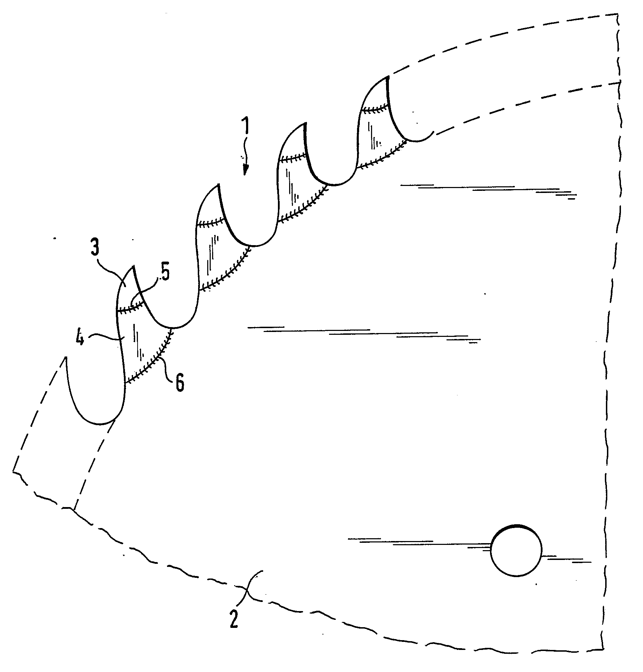

Nachstehend wird ein nach dem erfindungsgemäßen Verfahren hergestelltes Kreissägeblatt anhand der beigefügten Zeichnung näher beschrieben.

Diese zeigt in schematischer Seitenansicht einen Teil eines erfindungsgemäß hergestellten Kreissägeblatts 1 bestehend aus einer Stammscheibe 2, an deren Umfang HSS-Schneiden 3 aufgeschweißt sind, und zwar unter Einfügung eines Zwischenstücks 4. Die HSS-Schneiden 3 und Zwischenstücke 4 besitzen eine Dicke etwa entsprechend der Dicke der Stammscheibe 2. Die Verbindung der HSS-Schneiden 3 mit den Zwischenstücken 4 als auch die Verbindung der Zwischenstücke 4 mit der Stammscheibe 2 erfolgt jeweils durch Widerstandsschweißung (Schweißnähte 5 und 6). Die Zwischenstücke 4 bestehen jeweils aus einem Stahl mit niedrigem Kohlenstoffgehalt, insbesondere mit einem Kohlenstoffgehalt von weniger als 0,45 %. Die Stammscheibe 2 besteht vorzugsweise aus demselben Material bzw. Werkstoff wie die Zwischenstücke 4. Das beschriebene Kreissägeblatt 1 wird wie folgt hergestellt:

Zunächst werden die HSS-Schneiden 3 jeweils einzeln und weich bzw. in ungehärtetem Zustand (230 bis 290 HB) auf ein Zwischenstück 4 aufgeschweißt. Anschließend wird das Zwischenstück samt Schneide wärmebehandelt unter Aushärtung der Schneide 3 und gleichzeitiger Vergütung des Zwischenstücks 4. Dann wird das Zwischenstück 4 samt Schneide 3 längs des Umfangs der Stammscheibe 2 auf diese aufgeschweißt. Die HSS-Schneide 3 ist über das Zwischenstück 4 zähelastisch verbunden. Die Schweißverbindung 6 zwischen dem Zwischenstück 4 und der Stammscheibe 2 ist vom Zwischenstück 4 aus gesehen konkav gewölbt. Grundsätzlich ist auch eine konvexe Wölbung dieser Schweißverbindung denkbar. Dadurch wird eine besonders hohe Festigkeit der Verbindung zwischen Zwischenstück 4 und Stammscheibe 2 erzielt. Ähnlich gewölbt ist die Schweißverbindung 5 zwischen HSS-Schneide 3 und Zwischenstück 4. Die Länge des Zwischenstücks 4 entspricht vorzugsweise etwa der zweifachen Länge der HSS-Schneide 3. Damit ist ein ausreichend zähelastischer Übergang zwischen HSS-Schneide 3 und Stammscheibe 2 gewährleistet.

In gleicher Weise kann ein Sägeband für eine Bandsäge hergestellt werden.

Alternativ wäre es denkbar, HSS-Schneiden 3 weich, d. h. in ungehärtetem Zustand, unmittelbar auf die Stammscheibe 2 aufzuschweißen, um anschließend eine segmentweise Wärmebehandlung durchzuführen, vorzugsweise von Zahn zu Zahn. Dabei empfiehlt es sich, die HSS-Schneiden bzw. -Zähne jeweils induktiv auf etwa 1200° C zu erwärmen, anschließend mit Luft zu kühlen, um sie danach mindestens zweimal anzulassen. Beim Anlassen werden die HSS-Schneiden bzw. -Zähne jeweils auf etwa 550° C erwärmt. Zwischen den beiden Anlaßvorgängen erfolgt eine atmospärische Abkühlung auf weniger als 100° C.

Das Anlassen erfolgt wiederum induktiv und begrenzt auf die HSS-Schneiden bzw. -Zähne, da die Anlaßtemperatur jeweils über der Vergütungstemperatur der Stammscheibe liegt.

Dieses Verfahren erfordert eine Fertigungszeit von etwa 18 bis 20 min pro Zahn; es ist also bedeutend aufwendiger auf das vorbeschriebene Verfahren unter Anordnung eines Zwischenstücks zwischen den HSS-Schneiden und der Stammscheibe. Des weiteren erlaubt das letztgenannte Verfahren keine Reparatur des Kreissägeblatts oder eines entsprechend hergestellten Sägebands durch den Benutzer, da diesem in der Regel die Vorrichtungen für die beschriebene Wärmebehandlung der Schneiden bzw. Zähne fehlt.

Es sei an dieser Stelle auch nochmals erwähnt, daß eine Härtung weich aufgeschweißter HSS-Schneiden samt Stammscheibe nicht möglich ist. Es müßte dann nämlich auch die Stammscheibe auf etwa 1200° C erwärmt werden. Bei dieser Behandlung würde sich die Stammscheibe in unzulässiger Weise verwerfen und unbrauchbar werden.

Nach alledem hat sich das eingangs beschriebene und hier beanspruchte Verfahren als besonders vorteilhaft erwiesen, wobei die zuletzt genannte Vorgehensweise mit zähneweiser Härtung durchaus eine Alternative dazu darstellt, wenn auch mit gewissen Nachteilen behaftet.

Sämtliche in den Unterlagen offenbarten Merkmale werden als erfindungswesentlich beansprucht, soweit sie einzeln oder in Kombination gegenüber dem Stand der Technik neu sind.

**Ansprüche**

1. Verfahren zum Befestigen von HSS-Schneiden (3) oder dgl. an einem Werkzeug-Tragelement aus metallischem Werkstoff, insbesondere der Stammscheibe (2) eines Kreissägeblatts (1) oder dem Trägerband eines Sägebands für eine Bandsäge, unter Anordnung von Zwischenstücken zwischen Tragelement Schneiden,
**dadurch gekennzeichnet,**
daß die HSS-Schneiden (3) zunächst weich bzw. in ungehärtetem Zustand auf ein Zwischenstück (4) aufgeschweißt werden, und daß anschließend das Zwischenstück (4) samt Schneide(n) (3) wärmebehandelt wird unter Aushärtung der Schneide(n) (3) und gleichzeitiger Vergütung des Zwischenstücks (4), um dann das Zwischenstück (4) samt Schneide(n) (3) auf das Tragelement (2) aufzuschweißen.

2. Verfahren nach Anspruch 1,
**dadurch gekennzeichnet,** daß das Zwischenstück (4) aus Stahl mit niedrigem Kohlenstoffgehalt, insbesondere einem Kohlenstoffgehalt von weniger als 0,45 % hergestellt wird.

3. Verfahren nach Anspruch 1 oder 2,
**dadurch gekennzeichnet,** daß das Tragelement (2) aus einem ähnlichen, insbesondere demselben Material wie das Zwischenstück (4) hergestellt wird.

4. Verfahren nach einem oder mehreren der Ansprüche 1 bis 3,
**dadurch gekennzeichnet,** daß sowohl die Verbindung der Schneide (3) mit dem Zwischenstück (4) als auch die Verbindung des Zwischenstücks (4) samt Schneide mit dem Tragelement (2) durch Widerstands-, Elektronenstrahl-, Laserstrahl-, Plasma-Schweißung erfolgt.

5. Werkzeug mit einem aus Metall bestehenden Tragelement, insbesondere Stammscheibe (2) eines Kreissägeblatts (1) oder Trägerband eines Sägebands für eine Bandsäge, und daran befestigten HSS-Schneiden (3) oder dgl., wobei zwischen den Schneiden und dem Tragelement Zwischenstücke angeordnet sind,
**dadurch gekennzeichnet,** daß zwischen jeder Schneide (3) und dem Tragelement (2) ein Zwischenstück (4) angeordnet ist, welches aus vergütetem Stahl mit niedrigem Kohlenstoffgehalt besteht.

6. Werkzeug nach Anspruch 5,
**dadurch gekennzeichnet,** daß die Zwischenstükke (4) jeweils aus vergütetem Stahl mit einem Kohlenstoffgehalt von weniger als 0,45 % und das Tragelement (2) aus einem ähnlichen, insbesondere demselben Werkstoff bestehen.

7. Werkzeug nach Anspruch 5 oder 6,
**dadurch gekennzeichnet,** daß die Schneide (3) und das Zwischenstück (4) einerseits sowie das Zwischenstück (4) und Tragelement (2) andererseits jeweils schweißverbunden sind, insbesondere mittels Widerstandsschweißung (5, 6).

8. Werkzeug nach einem oder mehreren der Ansprüche 5 bis 7
**dadurch gekennzeichnet,** daß die Schweißverbindung (6) zwischen Zwischenstück (4) und Tragelement (2) vom Zwischenstück (4) aus gesehen konkav gewölbt ist.

9. Werkzeug nach einem oder mehreren der Ansprüche 5 bis 8,

**dadurch gekennzeichnet,** daß die Schneide (3) die wirksame Spitze eines am Tragelement ausgebildeten Sägezahns ist.

10. Werkzeug nach einem oder mehreren der Ansprüche 5 bis 9,

**dadurch gekennzeichnet,** daß die Schneide (3) vor der Verschweißung mit dem Zwischenstück (4) aus weichem bzw. ungehärtetem HSS, insbesondere HSS mit einer Brinell-Härte von etwa 230 bis 290 HB, besteht.

| | EINSCHLÄGIGE DOKUMENTE | | EP 88116948.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | <u>DE - C - 228 860</u> (SONNLEITHNER)<br>* Gesamt *<br><br>-- | 1 | B 23 D 61/04 |
| A | <u>DE - A - 2 318 471</u> (STORA)<br>* Gesamt *<br><br>-- | 1 | |
| A | <u>US - A - 3 800 633</u> (FUNAKUBO)<br>* Gesamt *<br><br>---- | 1 | |
| | | | **RECHERCHIERTE SACHGEBIETE (Int. Cl.4)**<br><br>B 23 D 45/00<br>B 23 D 61/00<br>B 23 D 65/00<br>B 27 B 33/00 |

Der vorliegende Recherchenbericht wurde für alle Patentansprüche erstellt.

| Recherchenort | Abschlußdatum der Recherche | Prüfer |
|---|---|---|
| WIEN | 16-01-1989 | KRUMPSCHMID |